# EUROPEAN PATENT APPLICATION

(11) **EP 1 731 372 A1**
(43) Date of publication of application: **13.12.2006**
(21) Application number: 04716369.6
(22) Date of filing: 02.03.2004
(51) Int. Cl.: B60R 16/02, B60R 11/02, B60Q 11/00, B60L 3/00, G10K 15/04

(54) **VEHICLE STATE, OPERATION ANNUCIATOR, AND PROGRAM**

(30) Priority: 05.03.2003 JP 2003058726; 05.03.2003 JP 2003058727
(71) Applicant: YAMAHA CORPORATION, Hamamatsu-shi, Shizuoka 430-8650 (JP); YAMAHA HATSUDOKI KABUSHIKI KAISHA, Iwata-shi, Shizuoka-ken 438-8501 (JP)
(72) Inventor: YAMAKI, Kiyoshi, c/o Yamaha Corporation, Hamamatsu-shi, Shizuoka 4308650 (JP); YOSHIZAWA, Akihiro, c/o Yamaha Hatsudoki K. K., Iwata-shi, Shizuoka 4388501 (JP); YAMAMURA, Masamitsu, c/o Yamaha Corporation, Hamamatsu-shi, Shizuoka 4308650 (JP)
(74) Representative: Kehl, Günther
(86) International application number: PCT/JP2004/002557
(87) International publication number: WO 2004/078526

(57) **Abstract**

It is detected whether a vehicle is currently in a running standby state, and, if the vehicle is currently in the running standby state, a predetermined tone is generated periodically. Along with the generation of the tone, a visual display is made in a display style that varies periodically in accordance with a displaying period synchronized with the generating period of the tone. Because that the vehicle is currently in the running standby state can be informed to a vehicle occupant both visually and auditorily in the above-mentioned manner, the vehicle occupant is allowed to intuitively identify that the vehicle is currently in the running standby state. Further, per internal operating state of the vehicle having operated in response to an instruction from an operation section, a tone, corresponding to the internal operating state, is generated for a predetermined tone generation time. Along with the tone generation, illumination control is performed on a light emission section such that a light amount gradually increases or decreases within a predetermined time. In this way, each state/operation of the vehicle can be informed in such a friendly and easy-to-follow manner as to make the vehicle occupant feel as if "the vehicle were awaking" or "the vehicle were falling asleep".

## Description

### Technical Field

The present invention relates to a state informing apparatus and program for informing a vehicle occupant of a vehicle state. Particularly, the present invention relates to a vehicle state informing apparatus and program which allow a vehicle occupant to intuitively identify or see that the vehicle is currently in a running (travel)-standby state or predetermined one or ones of various devices provided in or on the vehicle are operating normally in response to operation. Further, the present invention relates to an operation informing apparatus and program for informing a vehicle occupant of activation or deactivation of the vehicle with visual and auditory informing styles when the vehicle is activated or deactivated in response to activating or deactivating operation by a vehicle occupant. Particularly, the present invention relates to a vehicle operation informing apparatus and program which can inform a vehicle occupant of activation or deactivation of the vehicle with informing schemes or in informing styles that are friendly to the vehicle occupant and easy to follow by the vehicle occupant.

### Background Art

Among various known vehicles that run by being driven by an internal combustion engine, such as a gasoline engine, (e.g., automotive vehicles and motorcycles) are ones where an engine sound is generated from an engine itself in accordance with the number of rotations of the engine and the number of rotations of the engine is visually displayed. There have also been known vehicles which are constructed to inform a vehicle occupant of activation or deactivation of the vehicle, by generating an informing sound, such as a single continuous beep sound, or illuminating one or predetermined lights (e.g., head lamp and tail lamp) when the vehicle has been activated by turning on of a main switch (idling state period included) or deactivated by turning off of the main switch. Recently, development has been in progress of electric vehicles (such as electric scooters and electric cars) capable of running via an electric motor as a prime mover, and some of the known electric vehicles are constructed to intentionally generate sounds imitative of engine sounds in consideration of a silent character of the electric motor. For example, Japanese Patent Application Laid-open Publication No. HEI-7-032948 discloses an electric car which generates a tone with a volume corresponding to the opening degree of an accelerator and at a pitch corresponding to the number of rotations of the motor. Also known are engine-driven vehicles and electric vehicles which generate a tone in response to behavior of any of various devices activated in response to operation by a vehicle occupant. For example, the invention disclosed in Japanese Patent Application Laid-open Publication No. 2000-272414 is arranged to generate click sounds, corresponding to a velocity of the vehicle, in response to operation of a direction indicator called "flasher" or "blinker" and with a blinking period of the direction indicator. Further, in the invention disclosed in Japanese Utility Model Application Laid-open Publication No. HEI-4-070784 and Utility Model Publication No. 2533770, an electric two-wheeled vehicle is arranged to auditorily or visually inform a vehicle occupant of activation/deactivation of each predetermined device responsive to operation by a vehicle occupant. Namely, vehicles have heretofore been known which are constructed to generate a tone appealing to the ear of a vehicle occupant or make a visual display appealing to the eye of the vehicle occupant in order to inform the vehicle occupant of a travel-related state or operational state of the vehicle.

However, the conventionally-known electric vehicles could not generate pseudo idling sounds during a running standby state of the vehicle in which the vehicle is ready to start running any time in response to operation of the accelerator, because neither the accelerator is opened nor the motor is rotating during such a running standby state of the electric vehicles. Namely, there has been no idling sound available in the running standby state of the electric vehicles, unlike in the running standby state of vehicles equipped with an engine or other internal combustion engine. Further, even with the vehicles provided with an engine or other internal combustion engine, the idling sounds tend to be hard for a vehicle occupant to hear, because the recent engine is constructed to generate quiet engine sounds and the vehicle is additionally designed to prevent the engine sounds from reaching the interior of the vehicle compartment. Thus, the conventionally-known vehicles would encounter the problem that it is difficult for a vehicle occupant (human operator or driver in particular) to know that the vehicle is currently in the running standby state; consequently, erroneous operation, such as sudden start operation, tends to be performed, which is dangerous.

Besides, with the conventionally-known vehicles, it has been difficult for a vehicle occupant to intuitively confirm that predetermined one or ones of various devices are operating normally in response to operation by a vehicle occupant. Namely, the conventionally-known vehicles are arranged to merely inform that each predetermined one of the various devices has been duly activated or deactivated in response to operation by a vehicle occupant, and there has heretofore been no vehicle which can inform a vehicle occupant whether predetermined one or ones of various devices are operating normally in response to operation by the vehicle occupant.

Furthermore, the conventionally-known vehicles are arranged to inform a vehicle occupant of activation or deactivation of the vehicle with a particular informing scheme, e.g. by illuminating a light or generating an informing sound. Namely, because the conventionally-known vehicles are designed to merely inform a vehicle occupant of only activation or deactivation of the vehicle, they just use a monotonous, mechanical auditory informing scheme and visual informing scheme independently of each other for the informing purposes. However, the information or notification by the independent use of such mechanical informing schemes tends to be very difficult to identify and inconvenient. Further, because the information or notification is by the boring and monotonous informing schemes, a vehicle occupant may quickly get bored with or get used to the informing schemes, and the effects achievable by calling vehicle occupant's attention to activation or deactivation of the vehicle would decrease to the extent that the informing schemes can no longer effectively call vehicle occupant's attention.

### Disclosure of the Invention

Therefore, it is an object of the present invention to provide a novel vehicle state informing apparatus and program which allow a vehicle occupant to intuitively identify that the vehicle is currently in a running standby state or each predetermined one of various devices in the vehicle is operating normally in response to operation by the vehicle occupant.

It is another object of the present invention to provide a novel vehicle operation informing apparatus and program which can inform a vehicle occupant of activation or deactivation of the vehicle with mutually-synchronized visual and auditory informing schemes that are friendly to a vehicle occupant and easy to follow by the vehicle occupant and can make the vehicle occupant feel as if the vehicle were awaking or the vehicle were falling asleep.

According to a first aspect of the present invention, there is provided a state informing apparatus for informing an operating state of a vehicle, which comprises: a detection section for detecting that the vehicle is currently in a running standby state; a tone generation section for generating a predetermined tone periodically when the detection section has detected that the vehicle is currently in the running standby state; and a display section for making a display in a display style that varies periodically in accordance with a displaying period synchronized with a generating period of the tone.

In the present invention, it is detected whether the vehicle is currently in the running standby state, and, if the vehicle is currently in the running standby state, a predetermined tone is generated periodically. Along with the generation of the tone, a visual display is made in a display style that varies periodically in accordance with a displaying period synchronized with the generating period of the tone. Namely, the present invention provides a novel vehicle state informing apparatus which informs that the vehicle is currently in the running standby state with a correlated combination of an auditory informing scheme (style) and a visual informing scheme (style). Because that the vehicle is currently in the running standby state can be informed to the vehicle occupant both visually and auditorily in the above-mentioned manner, the vehicle occupant is allowed to intuitively see or identify that the vehicle is currently in the running standby state.

According to a second aspect of the present invention, there is provided a state informing apparatus for informing an operating state of a vehicle, which comprises: a detection section for detecting that the vehicle is currently in a running standby state; a display section for making a display in a display style that varies periodically, when the detection section has detected that the vehicle is currently in the running standby state: and a tone generation section for generating a tone periodically in accordance with a generating period synchronized with a displaying period of the display. With such arrangements too, the vehicle occupant is allowed to intuitively identify that the vehicle is currently in the running standby state.

According to a third aspect of the present invention, there is provided a state informing apparatus for informing an operating state of a vehicle, which comprises: a detection section for detecting that the vehicle is currently in a running standby state; a tone generation section for generating a predetermined tone periodically when the detection section has detected that the vehicle is currently in the running standby state; a display section for making a display in a display style that varies periodically, when the detection section has detected that the vehicle is currently in the running standby state; and a control section for performing control to provide synchronization between the tone and variation in the display style. With such arrangements too, the vehicle occupant is allowed to intuitively identify that the vehicle is currently in the running standby state.

According to a fourth aspect of the present invention, there is provided a state informing apparatus for informing an operating state of a vehicle, which comprises: a state detection section for detecting an operating state of a target device activated in response to operation; a display section for, in accordance with a result of operating state detection by the state detection section, making a display in a display style corresponding to the detected operating state and with a displaying period differing between a normal operating state and abnormal operating state of the device; and a tone generation section for generating a tone periodically in accordance with a generating period synchronized with the displaying period of the display. With such arrangements, the vehicle occupant is allowed to intuitively identify whether or not each predetermined device provided on or in the vehicle is operating in a normal manner.

According to another aspect of the present invention, there is provided an apparatus for informing operation in a vehicle, which comprises: a light emission section capable of being illuminated with a controlled light amount; an operation section for instructing at least activating or deactivation of the vehicle; a tone generation section for, per internal operating state of the vehicle having operated in response to an instruction from the operation section, generating a tone, corresponding to the internal operating state, for a predetermined tone generation time; and a control section for, per internal operating state of the vehicle, performing illumination control of the light emission section such that the light amount gradually increases or decreases within a predetermined time. In a preferred embodiment, the generation of the tone and the illumination control of the light emission means are performed, per internal operating state of the vehicle, with the tone generation time and the predetermined time synchronized with each other.

Namely, for each internal operating state of the vehicle having operated in response to an instruction from the operation section, a tone, corresponding to the internal operating state, is generated for a predetermined tone generation time, and, along with the generation of the tone, the illumination control is performed on the light emission section, for the internal operating state of the vehicle, such that the light amount of the light emission section gradually increases or decreases within a predetermined time. In order to inform the internal operating state of the vehicle with a correlated combination of the auditory informing scheme (style) and visual informing scheme (style), the generation of the tone and the illumination control of the light emission means are performed with the tone generation time and the predetermined time synchronized with each other. Namely, when informing each internal operating state of the vehicle through both the auditory informing scheme and the visual informing scheme, the illumination control is performed on the light emission section such that the light amount of the light emission section gradually increases or decreases in accordance with the generation of a tone. In this way, activation or deactivation of the vehicle can be informed in informing styles that are friendly to the vehicle occupant and easy to follow by the vehicle occupant and that can make the vehicle occupant feel as if "the vehicle were awaking" or "the vehicle were falling asleep".

The present invention may be constructed and implemented not only as the apparatus invention as discussed above but also as a method invention. Also, the present invention may be arranged and implemented as a software program for execution by a processor such as a computer or DSP, as well as a storage medium storing such a software program.

### Brief Description of Drawings

Fig. 1 is a block diagram showing system arrangements of a vehicle to which are applied a state informing apparatus or operation informing apparatus of the present invention;
Fig. 2 is a conceptual diagram showing an example of a panel construction of a display panel;
Fig. 3 is a conceptual diagram explanatory of examples of display patterns that can be displayed with individual cells of an indicator section;
Fig. 4 is a flow chart showing an embodiment of main processing;
Fig. 5 is a flow chart explanatory of processing for informing a running standby state; more specifically, Fig. 5(a) is a flow chart showing an embodiment of a running standby state informing process, Fig. 5(b) is a flow chart showing an embodiment of interrupt process A and Fig. 5(c) is a flow chart showing an embodiment of interrupt process B;
Fig. 6 is a flow chart explanatory of processing for informing that flashers are operating in a normal manner; more specifically, Fig. 6(a) is a flow chart showing an embodiment of an operating state informing process, and Fig. 6(b) is a flow chart showing an embodiment of interrupt process C;
Fig. 7 is a conceptual diagram showing an example of a data format of an informing style table;
Fig. 8 is a flow chart showing another embodiment of the main processing;
Fig. 9 is a flow chart showing an embodiment of an informing process of Fig. 8;
Fig. 10 is a state transition diagram explanatory of examples of informing schemes implemented when the vehicle is activated and deactivated; and
Fig. 11 is a state transition diagram explanatory of other examples of informing schemes implemented when the vehicle is activated and deactivated.

### Best Mode for Carrying Out the Invention

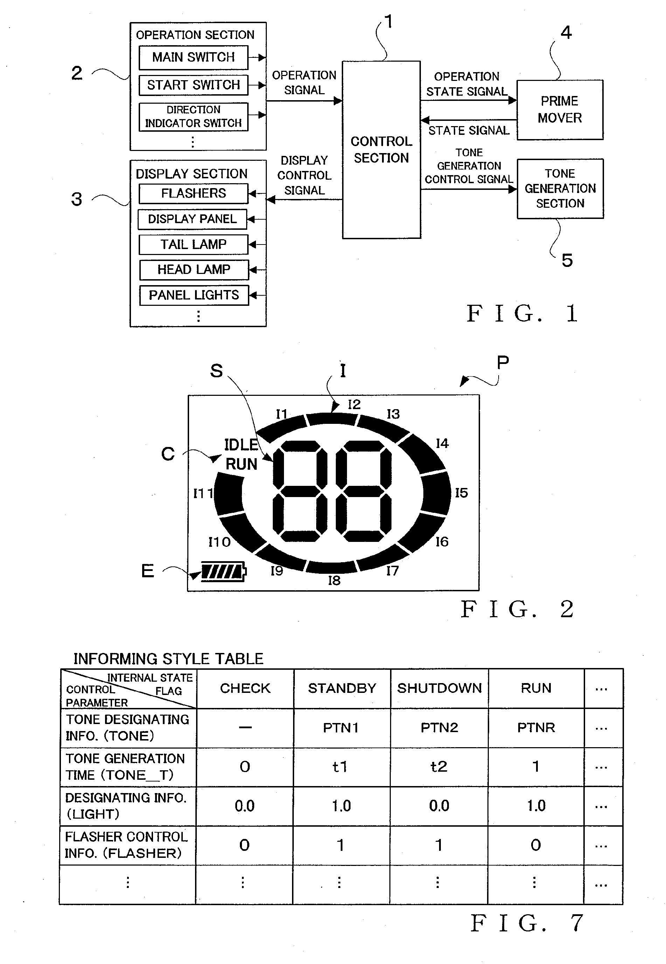

Fig. 1 is a block diagram showing system arrangements of a vehicle to which is applied a state informing apparatus or operation informing apparatus of the present invention. In the illustrated example, behavior of the entire vehicle is controlled by a control section 1 in the form of a one-chip microcomputer which includes, for example, a microprocessor unit (CPU), a read-only memory (ROM), a random access memory (RAM), a timer for generating control clock pulse signals, etc. Namely, the behavior of the entire vehicle is controlled by the control section 1 executing predetermined control programs (software programs). To the control section 1 are connected an operation section 2, display section 3, prime mover 4 and sound generation section 5. The operation section 2 includes various operators directly operable by a vehicle occupant, such as: a main switch, for example in the form of a key switch, for instructing a start or stop of electric power supply (i.e., powering-on or powering-off) from a not-shown battery to various devices provided in and on the vehicle, a start switch for activating the prime mover 4 that is a drive source of the vehicle; a direction indication switch for instructing a start or stop of blinking of any of direction indicators, called "flashers" or "blinkers", disposed on left and right sides at the front and rear of the vehicle; and not-shown handles, accelerator, brake, etc. When any one of the operators has been operated on the operation section 2, the control section 1 controls a corresponding one or ones of the various devices in accordance with an operation signal generated for the operated operator.

The display section 3 includes various lights, such as the flashers, head lamp and tail lamp, indicator lamps for displaying respective illuminating states of these lights etc., warning lights for displaying abnormal states of the various devices, a display panel, such as a liquid crystal display (LCD) panel or CRT, for displaying a speed, number of rotations of the motor and the like, light emitting elements, such as panel lights, etc. In the display section 3, control is performed for illuminating/deilluminating any of the tail lamp, head lamp, panel lights, etc. while adjusting a light amount of the light, for illuminating/deilluminating any of the indicator lamps and warning lights and for displaying a speed on the display panel. The prime mover 4, which is in the form of an electric motor, internal combustion engine (engine) or the like, drives the vehicle. Output of the prime mover 4 is controlled in accordance with an operation control signal given from the control section 1, and controlling the number of rotations of the prime mover 4 can cause the vehicle to run or stop running. When the number of rotations of the prime mover 4 has varied, i.e. when operation has been performed for opening or closing the accelerator, a state signal indicative of the number of rotations etc. is generated from the prime mover 4. Once such a state signal is received from the prime mover 4, the control section 1 controls the display section 3 to display an operational state represented by the received state signal. The tone generation section 5 is a tone generator module where any of various tone generator schemes, such as the FM and PCM tone generator schemes, and it is capable of simultaneously generating tone signals in a plurality of channels. In accordance with a tone generation control signal (that instructs, for example, tone generation/tone deadening or silencing) from the control section 1, the tone generation section 5 reads out and then audibly generates a predetermined tone, such as a predetermined effect sound or voice, prestored in the ROM or the like. Note that the tone generation section 5 may be implemented either as a dedicated circuit apparatus, or as a software program to be executed by a DSP (Digital Signal Processor) or CPU.

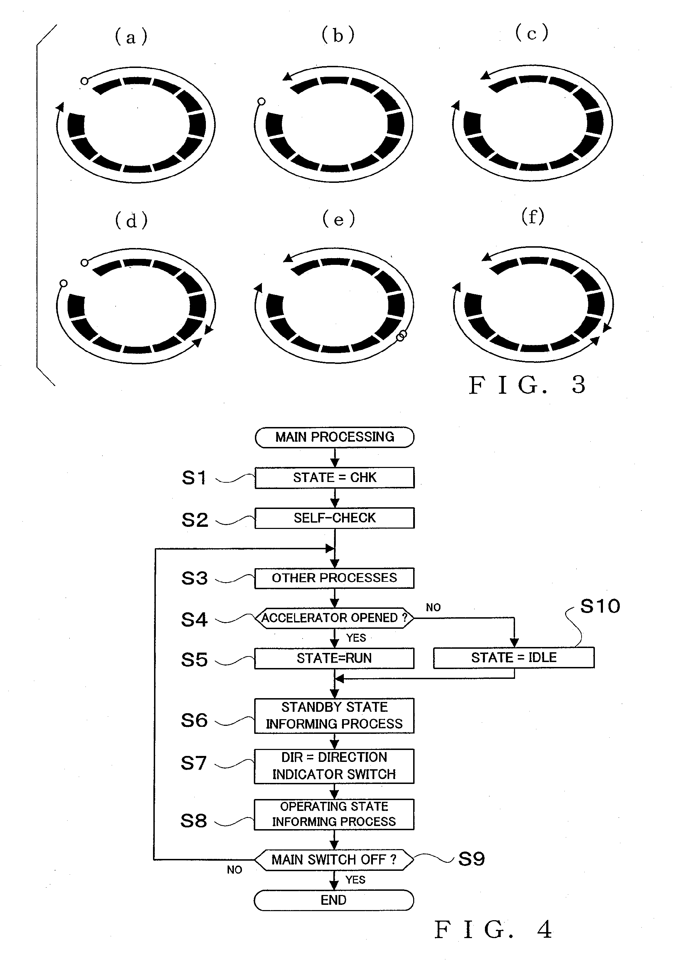

In the illustrated example of the vehicle, the above-mentioned control section 1 executes "main processing" (see Fig. 4 to be explained later), which is a control program directed to electric control of the vehicle, to determine whether the vehicle is currently in a running standby state and whether each predetermined one of the various devices is operating in a normal manner in response to operation by a vehicle occupant. Then, the control section 1, in accordance with each of the thus-detected states, controls the vehicle to generate a predetermined tone, such as a predetermined effect sound or voice, for the vehicle occupant and to make a visual display corresponding to the generated tone. More specifically, the control section 1 constantly detects a travel-related state of the vehicle corresponding to the number of rotations of the prime mover 4 and operational states of the various devices that operate in response to operation on the operation section 2, and the control section 1 generates a predetermined tone generation control signal and display control signal, corresponding to the detected states, to thereby control the display section 3 and tone generation section 5, so as to visually and auditorily inform the vehicle occupant of the states of the vehicle.

Various control programs, such as the "main processing", to be executed by the control section 1, tone data on the basis of which predetermined effect sounds, voices, etc. are to be generated, and various other data, such as a tone generation frequency table defining a generation time (e.g., generating period or interval) of a tone to be generated in correspondence with a travel-related state of the vehicle, are prestored in the ROM, RAM and/or the like. Although the storage means for storing the above-mentioned various control programs and data is preferably a semiconductor storage device, such as the ROM or RAM, unsusceptible to influences of vibration and shake that would occur due to running of the vehicle, the storage means may alternatively be an external storage means using any of various removable external storage media, such as a hard disk, flexible disk (FD), compact disk (CD-ROM, CD-RAM or the like), magneto optical disk (MO) and DVD (Digital Versatile Disk).

The operation control of the vehicle may be performed by any other suitable means than the computer software programs, such as microprograms executed by a DSP or a dedicated hardware apparatus containing discrete circuits, integrated circuit, large-scale integrated circuit or the like.

Next, examples of the display panel construction and display patterns will be explained briefly with reference to corresponding ones of the drawings. Fig. 2 is a conceptual diagram showing an example of the display panel construction, and Fig. 3 is a diagram showing examples of display patterns that can be displayed with individual cells I1 - I11 of an indicator section I.

As seen from the illustrated example of Fig. 2, the display panel P includes a numerical value display section S, indicator section I, travel-related state display section C and fuel display section E. The numerical value display section S is an area for displaying numerical values, such as those indicative of a running speed of the vehicle and the number of rotations of the prime mover 4. The indicator section I is a display area for displaying operational states of various devices in such a manner as to produce visual effects; namely, the eleven cells I1 - I11, arranged in an oval shape, are repetitively illuminated (or deilluminated) in predetermined order, so as to indicate a variety of display patterns corresponding to various states of the vehicle. The travel-related state display section C is a display area for informing the vehicle occupant of a travel-related state of the vehicle, i.e. whether the vehicle is currently in a running state or currently in a running standby state (i.e., a state where the vehicle is ready to start running any time in response to operation, by a vehicle occupant, of the accelerator). When the vehicle is currently in the running state, a "RUN" display is illuminated, while, when the vehicle is currently in the running standby state, an "IDLE" display is illuminated. The fuel display section E is a display area for indicating a state of charge of the battery or remaining amount of a fuel tank. With the displays on the above-mentioned individual display areas of the display panel P, it is possible to visually inform the operational or travel-related state of the vehicle and operational states of the various devices, in addition to auditorily informing the states through generation of tones.

In Fig. 3, there are shown display patterns that can be displayed by illumination/deillumination of the individual cells I1- I11 of the indicator section I. More specifically, Fig. 3 (a) shows a display pattern displayed by the illuminating cells I1-I11 being sequentially illuminated in a clockwise direction of the figure. Namely, the display pattern of Fig. 3 (a) is displayed by the indicator section I first illuminating the first cell I1 from an all-cell-deilluminated state, then illuminating the second cell I2 in addition to the first cell I1, ....., then illuminating the 11th cell I11 in addition to the 1st - 10th cells I1 - I10, then deilluminating all of these illuminated cells I1 - I11, and repeating such illumination and deillumination of the cells I1 - I11. In this case, a period (hereinafter "displaying period"), with which all of the cells I1 - I11 are sequentially illuminated from their deilluminated states into an substantial oval display pattern, is synchronized with the generating period of a tone, so that the auditory informing scheme and the visual informing scheme can be associated or correlated with each other. Various other display patterns than the above-described display pattern may be employed, such as: a display pattern in accordance with which the cells I1 - I11 are sequentially illuminated in a counterclockwise direction as seen in Fig. 3(b); a display pattern in accordance with which the cells I1 - I11 are sequentially illuminated in a reciprocating manner between the cells I1 - I11 as seen in Fig. 3(c); a display pattern in accordance with which the cells I1-I11 start to be illuminated simultaneously in two directions, i.e. in the clockwise direction from the cell I1 and in the counterclockwise direction from the cell I11 as seen in Fig. 3(d); a display pattern in accordance with which the cells I1 - I11 start to be illuminated simultaneously in both of the clockwise and counterclockwise directions from the cell 16 as seen in Fig. 3(e); and a display pattern in accordance with which the cells I1 - I11 are sequentially illuminated in a reciprocating manner between the cells I1 - I6 and between the cells I11
- I6 as seen in Fig. 3(f). The above-explained display patterns are intended to sequentially illuminate the cells in an incremental fashion; conversely, the operational states may be displayed in a display pattern where the cells are sequentially deilluminated in a decremental fashion from the all-cell-illuminated state. In another alternative, the operational states may be displayed in a display pattern where one group of illuminated cells is first deilluminated, and then another group of deilluminated cells is illuminated; namely, in this case, the number of the cell to be illuminated at a time is fixed to one or other predetermined number and the cell to be illuminated is sequentially shifted between the groups. In still another alternative, any desired display pattern may be set by the vehicle occupant using not-shown panel switches etc.

In the illustrated example of the vehicle, as set forth above, it is determined whether the vehicle is currently in the running standby state and whether each predetermined one or ones of the various devices, such as flashers, are operating in a normal manner in response to operation by the vehicle occupant, and the states of the vehicle are auditorily and visually informed to the vehicle occupant in informing styles, or with informing schemes, corresponding to the detected states. Thus, a general description will hereinafter be given about the "main processing" intended to inform such states of the vehicle. Fig. 4 is a flow chart showing an embodiment of the "main processing" performed by the control section 1 shown in Fig. 1. The control section 1 starts up the main processing once the main switch is turned on to start the supply of electric power (i.e., upon powering-on of the vehicle), and it then repetitively carries out the main processing until the main switch is turned off to terminate the supply of electric power (i.e., till powering-off of the vehicle).

The following description will be given in relation to a case where a target device, for which a determination as to whether or not the device is operating in a normal manner in response to operation by the vehicle occupant, is a direction indicator (flasher).

First, an initial value "CHK" is set into an internal state memory (indicated as "STATE" in the figure) that is used as a working memory indicative of a travel-related state of the vehicle (step S1). Then, a self-check process is carried out (step S2). This self-check process checks temperatures of engine oil and muffler, voltage state, state of electric power supply to various electric devices and components, etc. and performs as necessary other operations, such as an operation for illuminating a warning light. Upon completion of the self-check process, other processes are carried out (step S3). Examples of the other processes include processes for performing output control of the prime mover 4, ordinary operation control of any of the devices corresponding to operation of any one of the operators of the operation section 2 (e.g., illumination/deillumination control of the head lamp, flashers and the like), and control to display, on the display panel P (see Fig. 2), internal states of the vehicle (e.g., the number of rotations of the prime mover 4, and a current running speed and so-far-traveled distance of the vehicle). At next step S4, a determination is made as to whether or not the accelerator, among the operators included in the operation section 2, is currently in the opened position through operation by the vehicle occupant (driver in particular). If it has been determined that the accelerator is currently in the opened position through operation by the vehicle occupant (YES determination at step S4), the vehicle is judged to be currently in the running state, so that the internal state memory (STATE) is set to "RUN" (indicating that the vehicle is currently running) (step S5). If, on the other hand, it has been determined that the accelerator has not been operated and thus is not currently in the opened position (NO determination at step S4), the vehicle is judged to be currently in the running standby state, so that the internal state memory (STATE) is set to "IDLE" (indicating that the vehicle is currently in the "running standby" or "idling" state) (step S10).

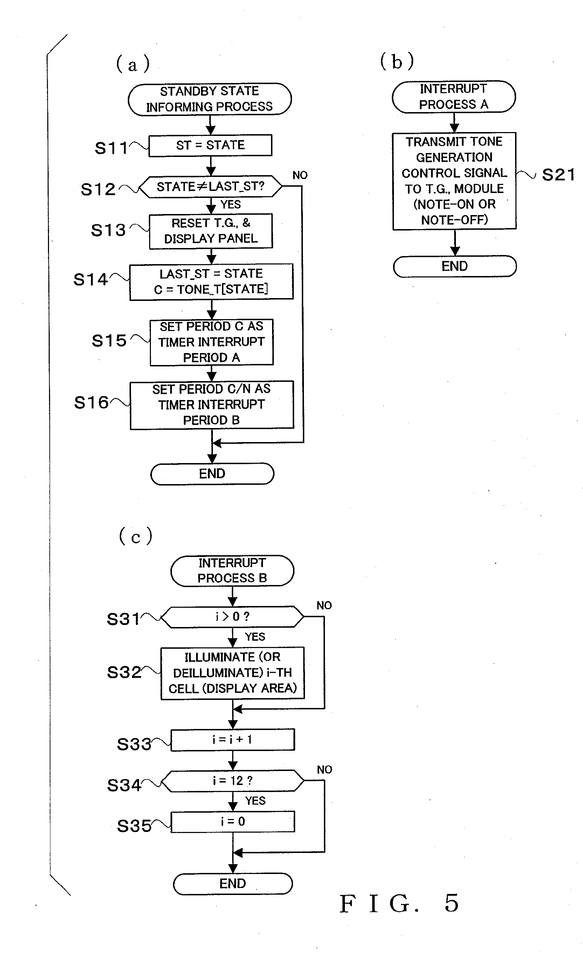

At step S6, a "standby state informing process" is carried out. The "standby state informing process" is a subroutine program which is started up by the control section 1 receiving, as an augment, the value currently set in the internal state memory (STATE) from the "main processing". In the "standby state informing process", control is performed such that a tone is generated for a predetermined generation time and a panel display is made in a predetermined display style with the predetermined generation time and predetermined display style corresponding to the augment (STATE), i.e. the predetermined generation time and predetermined display style differentiated depending on whether the vehicle is currently in the running state (the augment is "RUN") or in the running standby state (the augment is "IDLE"). Details of the "standby state informing process" will be discussed later (Fig. 5). At step S7, an operational state memory (indicated by "DIR" in the figure), used as a working memory indicating an operational state of the flashers, is set to any one of values indicative of "LEFT", "NEUTRAL" and "RIGHT" in response to operation of the direction indicator switch by the vehicle occupant (driver in particular). Namely, "LEFT" is set into the operational state memory (DIR) when the direction indicator switch has been operated to activate the flashers disposed on the left side at the front and rear of the vehicle, "NEUTRAL" is set into the operational state memory (DIR) when the direction indicator switch has been operated to deactivate all of the flashers disposed on the vehicle, and "RIGHT" is set into the operational state memory (DIR) when the direction indicator switch has been operated to activate the flashers disposed on the right side at the front and rear of the vehicle.

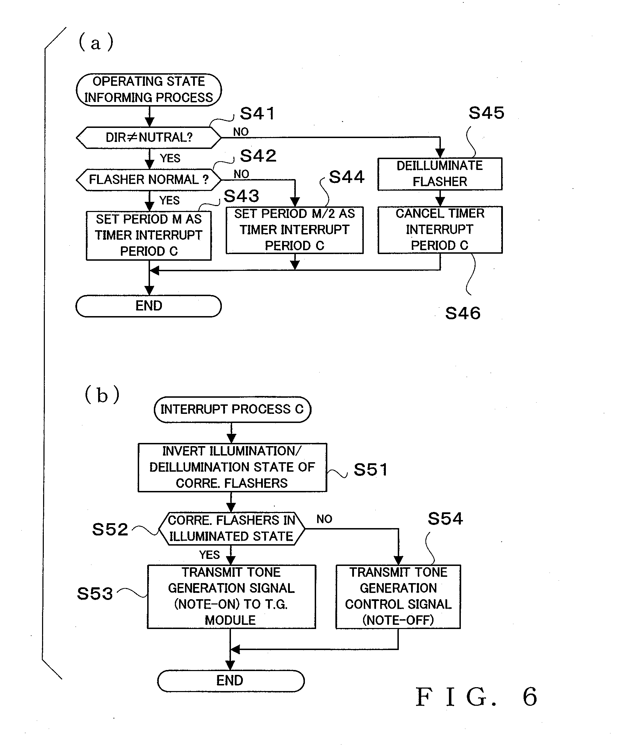

At step S8, an "operating state informing process" is carried out. The "operating state informing process" is a subroutine program which is started up by the control section 1 receiving, as an augment, the value currently set in the operational state memory (DIR) from the "main processing". In the "operating state informing process", control is performed such that a tone is generated for a predetermined generation time and a panel display is made in a predetermined display style with the predetermined generation time and predetermined display style differentiated depending on whether the flashers are operating in a normal manner in response to flasher-acting operation of the direction indicator switch (the augment is "LEFT" or "RIGHT"). Details of the "operating state informing process" will be discussed later (Fig. 6). At step S9, a determination is made as to whether the vehicle has been powered off through operation of the main switch. If the vehicle has been powered off (YES determination at step S9), the "main processing" is brought to an end. If the vehicle has not been powered off (NO determination at step S9), control reverts to step S3 above to repeat the operations of steps S3 - S10.

Next, a description will be given about the "standby state informing process" (step S6 of Fig. 4) for informing the vehicle occupant that the vehicle is currently in the running standby state, with reference to Fig. 5. Fig. 5(a) is a flow chart showing an embodiment of the "standby state informing process", and Fig. 5(b) is a flow chart showing an embodiment of "interrupt process A" which is carried out, per timer interrupt period A, in parallel with the "standby state informing process" to control the tone generator module to generate a tone per timer interrupt period A. Further, Fig. 5(c) is a flow chart showing an embodiment of "interrupt process B" which is carried out, per timer interrupt period B, in parallel with the "standby state informing process" to control the display panel to vary the display pattern per timer interrupt period B.

At step S11, the augment (STATE) received from the main processing is set into a current state memory (indicated as "ST" in the figure) as a current travel-related state. At step S12, a determination is made as to whether the augment (STATE) received from the main processing (see Fig. 4) has not varied from a preceding state (indicated by "LAST_STATE" in the figure) detected at a time point when the last "standby state informing process" ended. If the augment (STATE) received from the main processing has not varied from the preceding state at the end time point of the last "running-state informing process", i.e. if the preceding running state or running standby state is still kept (NO determination at step S12), then the "standby state informing process" is brought to an end, and control returns to the "main processing". Namely, in this case, a tone generation process is continued without the current tone generating period being changed. If, on the other hand, the augment (STATE) received from the main processing has varied from the preceding state (LAST_STATE) at the end time point of the last "running-state informing process" (YES determination at step S12), the tone generator (T.G.) module and the display panel are reset (step S13). Namely, the tone generator module is reset in order to compulsorily deaden or silence the currently-generated tone. Also, various displays on the display panel P are reset in order to deilluminate all of the cells I1 - I11 and illuminate one of the letter string displays ("RUN" or "IDLE" display) on the travel-related state display section C and deilluminate the other letter string.

At step S14, the augment (STATE) received from the "main processing" is set to the state at the end point of the last process (LAST_STATE). Also, one of the tone generation times, defined in the period table in relation to the running state (STATE = RUN) and running standby state (LAST = IDLE) of the vehicle, which corresponds to the set augment is read out, and the thus read-out tone generating period is set as a period C. At step S15, the period C is set as a timer interrupt period A that represents timing for carrying out interrupt process A. In this way, timer interrupt process A will be started up per period C. At next step S16, a period calculated by multiplying the above-mentioned period C with 1/N, i.e. 1/N of the tone generating period, is set as timer interrupt period B that represents timing for carrying out interrupt process B. Namely, in the "standby state informing process", timer interrupt period A and timer interrupt period B are set depending on whether the vehicle is currently in the running state or in the running standby state.

Interrupt process A shown in Fig. 5(b) is carried out in accordance with timer interrupt period A having been set in the "running standby informing process". At step S21, tone generation control signals are transmitted to the tone generator module (tone generation section 5). For example, a note-on (tone generation instructing) signal and note-off (tone silencing instructing) signal are transmitted alternately, as the tone generation control signals, at intervals of timer interrupt period A. The tone generator module generates a tone upon receipt of the note-on signal and deadens the tone upon receipt of the note-off signal. Therefore, the generation and deadening of the tone is repeated at intervals of timer interrupt period A. If the calculated period C (timer interrupt period A) is five sec., a note-on signal and note-off signal are received alternately at five sec. intervals, so that a tone generating period of five sec. and a tone deadening period of five sec. occur alternately at five sec. intervals. In a case where an attenuating tone or pulse-like tone is used, there is no need to transmit a note-off signal at step S21.

Interrupt process B shown in Fig. 5(c) is carried out in accordance with timer interrupt period B having been set in the "running standby informing process". At step S31, a determination is made as to whether or not a variable i (integral value) is greater than 0 (zero). If the variable i is greater than 0 (YES determination at step S31), a display control signal is transmitted to the display panel (display section 2) so that the i-th cell Ii of the indicator section I is illuminated (step S32). If there is employed a display pattern in accordance with which the illuminated cells are sequentially reduced, a display control signal to deilluminate the i-th cell Ii of the indicator section I is transmitted to the display panel. At step S33, 1 (one) is added to the variable i. At following step S34, a determination is made as to whether or not the variable i is equal to 12. If the variable i is equal to 12 (YES determination at step S34), the variable i is set to 0 (step S35). Note that, in interrupt process B performed when the variable i has been set to 0, it is determined at step S31 that the variable i is not greater than 0, and the process proceeds in the order of "step S31" → "step S33" → "step S34" → "end", so that the indicator section I takes the all-cell-deilluminated state with no cell illuminated in the section I. In this manner, control is performed such that the running state or running standby state is displayed by sequentially illuminating the cells I1 - I11 of the indicator section I with 1/N of the tone generating period C. For example, in the case where the indicator section I is displayed in display patterns with a total of 12 different illuminating states as seen in Fig. 3(a) and Fig. 3(b) (i.e., the number of the illuminating states is 12), and if the variable N is set to 12 that is equal to the number of the illuminating states, it is possible to visually display the state in such a manner that all of the cells I1 - I11 of the display panel P are sequentially illuminated once per generation of a tone; as a consequence, the tone generation and the display by the indicator section can be synchronized with each other. Similarly, where the indicator section I is displayed in display patterns with a total of 24 different illuminating states as seen in Fig. 3(c), the variable N is set to 24 that is equal to the number of the illuminating states, and, where the indicator section I is displayed in display patterns with a total of 6 different illuminating states as seen in Fig. 3(d) and 3(e), the variable N is set to 6 that is equal to the number of the illuminating states; thus, in these case too, the tone generation and the display by the indicator section can be synchronized with each other.

The above-described embodiment is arranged to make the visual display, indicative of the running state or running standby state, with a period equal to 1/N of the tone generating period C, but the present invention is not so limited. For example, the display, indicative of the running state or running standby state, may be made with a period equal to N times of the tone generating period C (N is an arbitrary integral number). Further, the user may variably set whether the display should be made with N times of the tone generating period or 1/N of the tone generating period. Note that, whereas the embodiment has been described above as varying the displaying period in accordance with the generating period of the tone that is to be generated in accordance with the running state or running standby state of the vehicle, the present invention is not so limited, and the tone generating period may be varied in accordance with the displaying period.

Note that the display pattern may be any one of those illustrated in Fig. 3 and the display pattern may be differentiated between the running state and running standby state of the vehicle.

Next, a description will be given the "operating state informing process" (see step S8 of Fig. 4) for informing the vehicle occupant that each predetermined flasher is operating in a normal manner in response to operation of the direction indicator switch. More specifically, Fig. 6(a) is a flow chart showing an embodiment of the "operating state informing process", and Fig. 6(b) is a flow chart showing an embodiment of "interrupt process C" which is performed, in parallel with the "operating state informing process" per timer interrupt period C mentioned above, to control illumination of the flasher and generation of a tone.

At step S41, a determination is made as to whether or not the operational state (DIR) received from the main processing is currently set at "NEUTRAL". If the operational state (DIR) is currently set at "NEUTRAL" (NO determination at step S41), all of the currently-blinking flashers are deilluminated (step S45), and the setting of timer interrupt period C, which represents timing for carrying out interrupt process C is canceled (step S46). In this case, interrupt process C is not carried out. If, on the other hand, the operational state (DIR) is not currently set at "NEUTRAL", i.e. if the operational state (DIR) is currently set at "LEFT" or "RIGHT" (YES determination at step S41), a further determination is made as to whether or not all of the corresponding flashers are operating in a normal manner (step S42). If all of the corresponding flashers are operating in a normal manner (YES determination at step S42), a period M is set as the timer interrupt period C (step S43). This period M represents an illuminating period of the flashers during normal operation and generating period of a corresponding tone. If any of the flashers are not operating in a normal manner, e.g. if any one of the flashers disposed at the front and rear of the flashers is not blinking, due to a malfunctioning or broken bulb, despite turning-on operation of the flasher (NO determination at step S42), a period M/2 is set as the timer interrupt period C (step S44). Thus, in the "operating state informing process", a different period is set as the timer interrupt period C, depending on whether or not each predetermined flasher corresponding to operation of the direction indicator switch is operating in a normal condition.

Interrupt process C shown in Fig. 6(b) is a process carried out in accordance with timer interrupt period C having been set in the above-described "operating state informing process". At step S51, control is performed to invert the illumination/deillumination state of the flashers corresponding to the operational state (DIR) (step S51). Namely, each of the corresponding flashers is controlled to blink in response to operation of the direction indicator switch. At step S52, a determination is made as to whether the corresponding flashers are currently in the illuminated state. If the corresponding flasher are currently in the illuminated state (YES determination at step S52), a tone generation control signal (e.g., note-on signal) is transmitted to the tone generator module (tone generation section 5) (step S53). If the corresponding flasher are currently in the deilluminated state (NO determination at step S52), a tone generation control signal (e.g., note-off signal) is transmitted to the tone generator module (step S54). In this way, control can be performed such that a tone is generated in conformity with a blinking period of the flashers. In this case, the tone generating period and flasher blinking period are set to the period M when the flashers are operating normally, but compressed to half the period (M/2) when the flashers are not operating normally, to thereby perform respective control. Where an attenuating tone or pulse-like tone is employed, the operation of step S54 may be dispensed with.

The target device, for which the determination as to whether or not the device is operating in a normal manner in response to operation by the vehicle occupant, may be any other device than the direction indicator (flasher). For example, an anomaly or abnormal operation may be detected of any one of the various other devices, such as the prime mover or battery, and the detected anomaly may be informed by blinking of a flasher. However, where the operating state detection is applied to the prime mover, and when it has been detected that the prime mover is not operating normally, control is performed such that the idling/running state is informed with 1/2 of the period that is applied during the normal operation. Namely, the state informing style during abnormal operation may be differentiated among the devices.

Note that, during running of the vehicle, the displaying period or tone generating period may be varied in accordance with a vehicle speed or the like.

In each of the above-described embodiments, the tone generating period is varied in accordance with each detected state, but the present invention is not so limited; for example, a music-piece-data readout period may be varied. In such a case, the vehicle occupant can more readily and more clearly identify each state, because the detected state is informed with the tone pitch varied in accordance with the detected state.

Further, whereas the embodiments have been described above in relation to the case where the control section collectively controls and manages synchronization between the tone generation and the visual display, the control section may controls and manages synchronization between the tone generation and the visual display in conjunction with the tone generation section (tone generator device) that is constructed to output, as necessary, a signal corresponding to a tone signal generation state and/or the like. In this case, the control section can use the above-mentioned signal for the display control, so that it is possible to lower the processing loads on the control section.

According to the embodiments of the present invention having been described above with reference to Figs. 1-6, that the vehicle is currently in the running standby state and that each predetermined device is operating in a normal manner in response to operation of the vehicle occupant are informed through an interrelated combination of visual and auditory informing schemes or styles, and thus, there can be provided the benefit that the vehicle occupant can intuitively identify each state of the vehicle through the visual and auditory senses.

The following paragraphs describe an embodiment of the operation informing apparatus in accordance with another aspect of the present invention, with reference to Figs. 1 and 7 - 11.

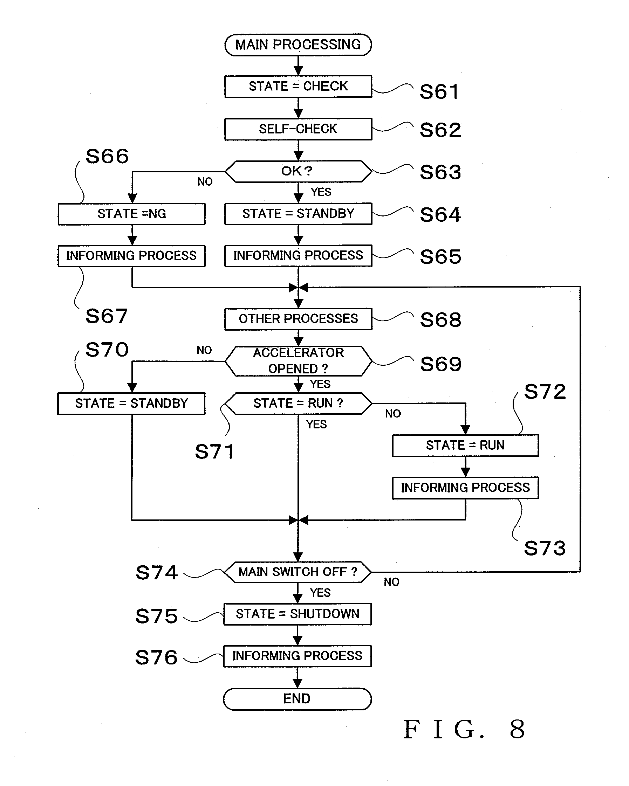

In the illustrated example of the vehicle, the above-mentioned control section 1 of Fig. 1 executes "main processing" as illustrated in Fig. 8, which is a control program directed to electric control of the vehicle. If operation of the main switch by the vehicle occupant is intended to instruct activation/deactivation of the vehicle, the control section 1 controls the vehicle to generate a predetermined tone, such as a predetermined effect sound or voice, toward the vehicle occupant and to illuminate/deilluminated each predetermined light in such a manner that the state of the predetermined light gradually changes in accordance with the generated tone. More specifically, the control section 1 constantly detects the operational state of the main switch and controls the display section 3 and tone generation section 5 by generating a predetermined tone generation control signal and display control signal corresponding to the detected operational state, of the main switch, to thereby inform the vehicle occupant of activation/deactivation of the vehicle in visual and auditory manners. In this case, the display section 3 is controlled in such a manner that, at the time of activation of the vehicle, each predetermined light is illuminated with its light amount gradually increased to thereby make the vehicle occupant feel as if "the vehicle were awaking" and that, at the time of deactivation of the vehicle, the predetermined light is illuminated with the light amount gradually decreased to thereby make the vehicle occupant feel as if "the vehicle were falling asleep"

In this embodiment too, various control programs, such as the "main processing", to be executed by the control section 1, tone data on the basis of which predetermined effect sounds, voices, etc. are to be generated, and various other data, such as an informing style table (to be later described) defining various control parameters corresponding to various internal states of the vehicle, are prestored in the ROM, RAM and/or the like. Also, although the storage means for storing the above-mentioned various control programs and data is preferably a semiconductor storage device, such as the ROM or RAM, unsusceptible to influences of vibration and shake that would occur during running of the vehicle, the storage means may alternatively be an external storage means using any of various removable external storage media, such as a hard disk, flexible disk (FD), compact disk (CD-ROM, CD-RAM or the like), magneto optical disk (MO) and DVD (Digital Versatile Disk), or a semiconductor memory, such as a flash memory, as long as the external storage means is constructed to be unsusceptible to influences of vibration and shake.

The informing style table stored in the ROM, RAM, external storage device or the like is explained here. Fig. 7 is a conceptual diagram showing an example of a data format of the informing style table. The informing style table contains data defining various control parameters for controlling the display section 3 and tone generation section 5 in accordance with various possible internal states of the vehicle during a time period from activation to deactivation of the vehicle. In the illustrated example of Fig. 7, the various control parameters are defined vertically in association with internal state flags, corresponding to the internal states of the vehicle, listed horizontally.

The internal state flag "CHECK" indicates an internal state of the vehicle during a time period from turning-on operation, by the vehicle occupant, of the main switch to an end of the self-check process for checking the voltage state, state of electric power supply to various electric devices and components, etc., i.e. the internal state flag indicates that the vehicle is in the activated state. The internal state flag "STANDBY" indicates a state where the above-mentioned self-check process has been completed properly, i.e. indicates that the vehicle is currently in the running standby state. The internal state flag "SHUTDOWN" indicates a state during a time period from turning-off operation by the vehicle occupant to a complete stop of the vehicle, i.e. the internal state flag indicates that the vehicle is currently in a stopping standby state. The internal state flag "RUN" indicates that the vehicle is currently in the running state through operation, by the vehicle occupant, of the accelerator. These internal state flags correspond to contents of the internal state memory (STATE) varying stepwise in response to operation by the vehicle occupant etc (see the main processing shown in Fig. 8).

In the informing style table, there are defined a plurality of control parameters in association with the above-mentioned internal stage flags. Examples of the control parameters include tone designating information (TONE), tone generation time information (TONE_T), light amount designating information (LIGHT), flasher control information (FLASHER), etc. The tone designating information (TONE) is information for designating a tone to be generated in response to an internal state of the vehicle, such as information designating one of unique ID numbers assigned in advance to individual tone data. The tone generation time information (TONE_T) is information related to a generation time (generating period or interval) of the tone to be generated in response to an internal state of the vehicle; for example, a tone generation time is defined in milliseconds. The light amount designating information (LIGHT) is information designating an amount of light of each predetermined lamp (e.g., head lamp, tail lamp, panel light or the like); for example, an appropriate value in the range of 0.0 - 1.0 may be set as the light amount designating information. In the instant embodiment, it is assumed that the value "0.0" defines a deilluminated state of the lamp in question, while the value "1.0" defines a deilluminated state of the lamp in question. Each predetermined lamp is illuminated with its amount of light controlled from the deilluminated state to the illuminated state with the maximum amount of light, in accordance with the value of the light amount designating information (LIGHT). The flasher control information (FLASHER) is information instructing whether or not the flasher should be controlled to blink; in the instant embodiment, when the value of the light amount designating information is "1", the flasher is controlled to blink, while, when the value of the light amount designating information is "0", the flasher is kept deilluminated without being controlled to blink.

As set forth above, the informing style table defines, as control parameters, a tone to be generated, generation time (generating period or interval) of the tone to be generated, light amount of each predetermined lamp to be subjected to illumination control, blinking/non-blinking of each flasher, in correspondence with internal states (i.e., internal operating states) of the vehicle that can vary on the basis of activating/deactivating operation by the vehicle occupant.

In the vehicle to which the embodiment is applied, each time the internal state (activated state (CHECK), running standby state (STANDBY), running state (RUN), stopping standby state (SHUTDOWN), or the like) of the vehicle varies in response to ON/OFF operation, by the vehicle occupant, of the main switch, tone generation control is performed in accordance with various control parameters defined in the informing style table, and also illumination control is performed on each predetermined light in such a manner that the light is illuminated or deilluminated with the light amount gradually varied. Such control can auditorily and visually inform the vehicle occupant of the activation/deactivation of the vehicle. So, a general description will be given about the "main processing" directed to such informing operations. Fig. 8 is a flow chart showing another embodiment of the "main processing" executed by the control section 1 shown in Fig. 1. The control section 1 starts up the main processing once the main switch is turned on to start the electric power supply to the vehicle (i.e., in response to powering-on of the vehicle), and repetitively carries out the main processing until the main switch is turned off to terminate the electric power supply (i.e., until powering-off of the vehicle).

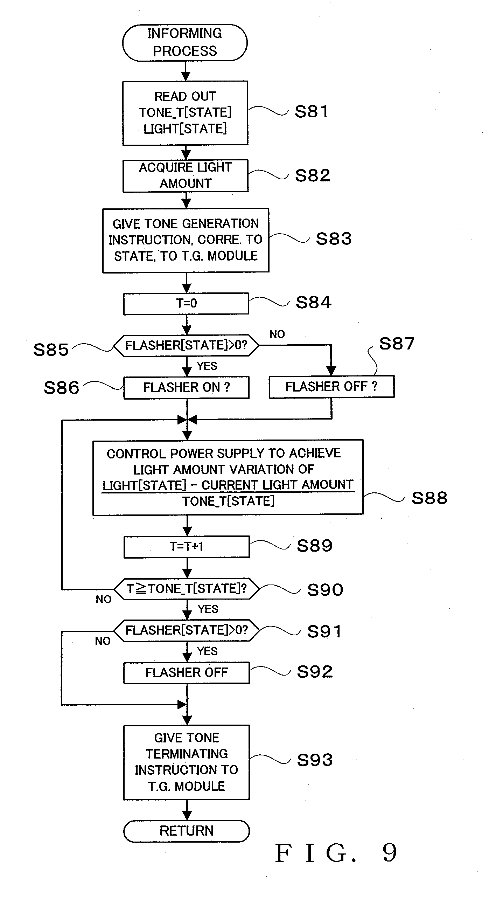

First, an initial value "CHECK" is set into an internal state memory (indicated by "STATE" in the figure) that is used as a working memory indicative of an internal state of the vehicle (step S61). Then, a self-check process is carried out (step S62). This self-check process checks the temperatures of the engine oil and muffler, voltage state, state of electric power supply to various electric devices and components, etc. At step S63, a determination is made as to whether there has been detected no anomaly through the self-check process. If no anomaly has been detected through the self-check (YES determination at step S63), the internal state memory (STATE) is set to "STANDBY (running standby state)" (step S64). If, on the other hand, any anomaly has been detected through the self-check (NO determination at step S63), the internal state memory (STATE) is set to "NG (ABNORMAL state)" (step S66). After completion of the operation at step S64 or S66, an "informing process" is carried out at step S65 or S67. The "informing process" is a subroutine program which is started up by the control section receiving, as an augment, the value currently set in the internal state memory (STATE) from the "main processing". The "informing process" performs different tone generation control and illuminating control in accordance with the augment (STATE), namely, depending on whether the vehicle is currently in the activated state (where the augment is CHECK), in the running standby state (where the augment is STANDBY), in the running state (where the augment is RUN), in the stopping standby state (where the augment is SHUTDOWN), in the abnormal state (where the augment is NG), or the like. Details of the "informing process" will be explained later (see Fig. 9).

At step S68, "other processes" are carried out. Examples of the other processes include operations for performing output control of the prime mover 4, ordinary operation control of any of the devices corresponding to operation of any one of the operators in the operation section 2 (e.g., illumination control of the head lamp or flashers), and control to display, on the liquid crystal display panel, the number of rotations of the prime mover 4 during running of the vehicle, and a current running speed and so-far-traveled distance of the vehicle. At next step S69, a determination is made as to whether or not the accelerator, among the operators included in the operation section 2, is currently in the opened position through operation by the vehicle occupant (driver in particular). If it has been determined that the accelerator has not been operated and thus is not currently in the opened position (NO determination at step S69), the vehicle is judged to be currently in the running standby state, so that the internal state memory (STATE) is set to "STANDBY" ("running standby" state) (step S70). If, on the other hand, it has been determined that the accelerator is currently in the opened position through operation by the vehicle occupant (YES determination at step S69), it is further determined whether the internal state memory (STATE) has already been set to "RUN" ("currently running") (step S71). If the internal state memory has not yet been set to "RUN" (NO determination at step S71), the vehicle is judged to be in the "running state" and the internal state memory (STATE) is set to "RUN" ("currently running") (step S72), so that the "informing process" is carried out with "RUN" as the augment (step S73).

At step S74, a determination is made as to whether the vehicle has been powered off through operation of the main switch. If the vehicle has been powered off (YES determination at step S74), the vehicle is judged to be currently in the "stopping standby state", and the internal state memory (STATE) is set to "SHUTDOWN (stopping standby state)" (step S75). Then, the "informing process" is carried out with "SHUTDOWN" as an augment (step S76), after which the "main processing" is brought to and end. If, on the other hand, the vehicle has not been powered off (NO determination at step S74), control reverts to step S68 above to repeat the operations of steps S68 - S74.

Next, a description will be given about the subroutine program that performs the tone generation control and light illumination control in accordance with the internal states of the vehicle and on the basis of the augments received from the "main processing" (see steps S65, S67, S73 and S76 of Fig. 8), with reference to Fig. 9. Fig. 9 is a flow chart showing an embodiment of the informing process. Let it be assumed that, in this embodiment, a loop process (operations of steps S88 - S90) for controlling the light amount is executed every one millisecond.

At step S81, on the basis of the augment (internal state memory (STATE)) received from the "main processing", corresponding tone generation time information (TONE_T [STATE]) and light amount designating information (LIGHT [STATE]) is read out from the above-mentioned informing style table. At next step S82, the current light amount is acquired. Namely, a current illuminating state of each of various lights, and an amount of light, particularly that of each currently-illuminated light, is acquired. At step S83, a tone generation instruction corresponding to the augment (STATE) is given to the tone generator module. Namely, waveform data etc. are read out on the basis of corresponding tone designating information in the informing style table, and the tone generator module is instructed to perform a tone generation process on the basis of the read-out waveform data. At step S84, a time parameter T (in msec.) for designating a light amount controlling time is set to 0. At step S85, a determination is made as to which of values "1" and "0" the corresponding flasher control information (FLASHER [STATE]) in the informing style table is set at. If the flasher control information (FLASHER [STATE]) is set at 1 (YES determination at step S85), each predetermined flasher is set to an ON (blinking) state (step S86). If the flasher control information (FLASHER [STATE]) is set at 0 (NO determination at step S85), on the other hand, the flasher is set to an OFF (deilluminated) state (step S87).

At next step S88, the electric power supply to each predetermined light is controlled so that the light amount gradually changes to that defined by the light amount designating information (LIGHT [STATE]) within a time defined by the tone generation time information (TONE_T [STATE]). For example, the electric power supply to the predetermined light is controlled in such a manner that the light amount varies linearly at a variation rate of "(LIGHT[STATE] - current light amount)". At step S89, a value "1" is added to the time parameter T. At next step S90, a determination is made as to whether the time parameter T indicates a time equal to or longer than the time defined by the tone generation time information (TONE_T [STATE]). If the time parameter T does not indicates a time equal to or longer than the defined time (NO determination at step S90), control reverts to step S88 in order to repeat the operations of steps S88 - S90. Namely, the light amount control of each predetermined light is performed through a loop process, where the illumination control of the predetermined light is carried out in such a manner that the light amount of the predetermined light gradually varies, within the tone generation time, from the current light amount, acquired at step S82, to the light amount defined by the light amount designating information (LIGHT [STATE]). In the case where the informing style table of Fig. 7 is employed, the illumination control is performed such that the predetermined light is gradually shifted from the deilluminated state (the light is in the deilluminated state because it is immediately after powering-on) over to the illuminated state with the maximum light amount, taking "t1" msec., when the informing process has been called on the basis of the augment (STANDBY) (here, the light amount designating information is defined as "1.0"), such that the light is immediately shifted over to the illuminated state with the maximum light amount when the informing process has been called on the basis of the augment (RUN) (here, the tone generation time information is defined as one msec.), or such that the light is gradually shifted from the current illuminated state over to the deilluminated state, taking "t2" msec., when the informing process has been called on the basis of the augment (SHUTDOWN). At step S31, a determination is made as to which of values "1" and "0" the flasher control information (FLASHER [STATE]) is defined as. If the flasher control information (FLASHER [STATE]) is defined as the value "1" (YES determination at step S31), the flasher is turned off (deilluminated) (step S92). Namely, by carrying out the operation of step S92 in combination with the operation of step S86, the flasher is controlled to assume the blinking state within the tone generation time. Further, a tone terminating instruction is given to the tone generator module at step S93.

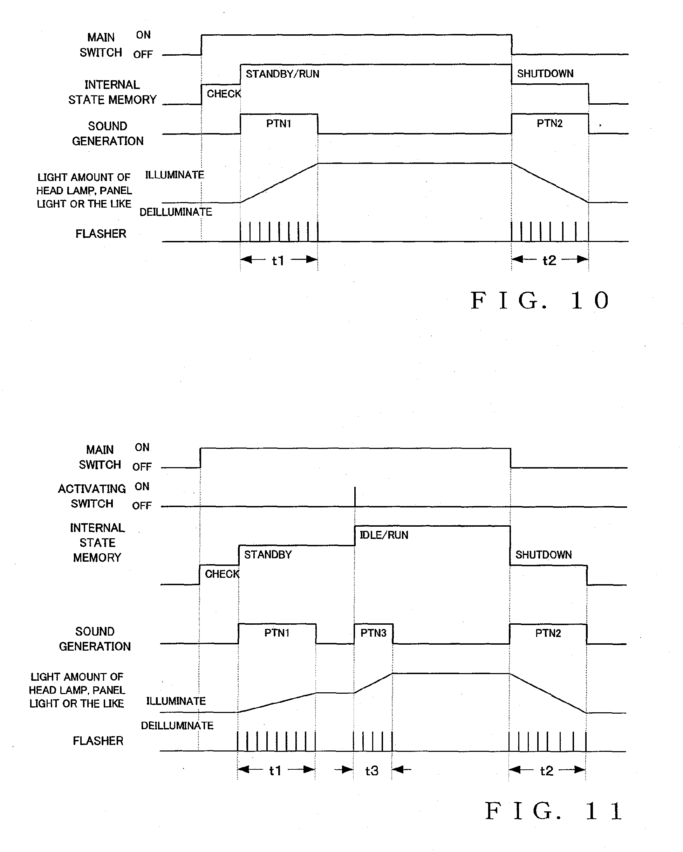

Now, a description will be given about a specific example of the informing styles or schemes involved in the execution of the above-described "main processing", with reference to Fig. 10. Fig. 10 is a state transition diagram explanatory of an embodiment of the informing schemes where the vehicle is activated and deactivated in response to turning-on and turning-off of the main switch. In Fig. 10, there are illustrated, from top to bottom, respective state transitions of the main switch, internal state memory, tone (sound) generation, light amount of each predetermined light and flasher. The following description is made in relation to a case where the informing style table of data contents shown in Fig. 7 is employed.

First, once powering-on operation is performed, for example, by the vehicle occupant turning the main switch to an "ON" position, the control section 1 carries out the self-check process and also sets the internal state memory to the activated state (CHECK) of the vehicle, after which it performs the informing process. When the self-check process has been completed properly, the internal state memory is shifted from the activated state (CHECK) to the running standby state (STANDBY), and then the informing process is performed. In the informing process, tone data corresponding to "pattern 1" (PTN1) are read out on the basis of the tone designating information corresponding to the state (STANDBY) of the internal state memory, and generation of the tone is controlled in such a manner that the read-out tone data are reproduced only for the tone generation time (t1). Further, illumination control is performed in such a manner that the light amount of the light is gradually increased, in synchronism with the tone generation time (t1), up to the one indicated by the light amount designating information (in this case, maximum light amount "1.0"). Furthermore, blinking control is performed on the flasher, on the basis of the flasher control information, in such a manner that the flasher repeats blinking every predetermined period only for the tone generation time (t1). Upon lapse or passage of the tone generation time (t1), control is performed such that the tone of pattern 1 (PTN1) is silenced, the light is illuminated with the maximum light amount and the flasher is deilluminated. Namely, as the vehicle is shifted from the activated state to the running standby state, a tune is generated only for a predetermined time, each predetermined light is illuminated with the light amount gradually varied and each predetermined flasher is blinked, so as to inform the vehicle occupant that the vehicle has been shifted to the "standby state (running standby state)" where the vehicle is ready to run in response to operation, by the vehicle occupant, of the accelerator. In this way, it is possible to inform the vehicle occupant of the activation of the vehicle with such an informing scheme as to make the vehicle occupant feel as if "the vehicle were awaking", with the result that the vehicle occupant can readily see that the vehicle has been activated into the (running standby state).

On the other hand, once powering-off operation is performed, for example, by the vehicle occupant turning the main switch to an "OFF" position, the control section 1 sets the internal state memory to a state representing the stopping standby state (SHUTDOWN) of the vehicle, after which it performs the informing process. In the informing process, tone data corresponding to "pattern 2" (PTN2) are read out on the basis of the tone designating information corresponding to the state (SHUTDOWN) of the internal state memory, and generation of the tone is controlled in such a manner that the read-out tone data are reproduced only for the tone generation time (t2). Further, illumination control is performed in such a manner that the light amount of the light is gradually decreased, in synchronism with the tone generation time (t2), to the one indicated by the light amount designating information (in this case, minimum light amount "0.0"). Furthermore, blinking control is performed on the flasher, on the basis of the flasher control information, in such a manner that the flasher repeats blinking every predetermined period only for the tone generation time (t2). Upon lapse of the tone generation time (t2), control is performed such that the tone of pattern 2 (PTN2) is silenced, and the light and the flasher are both deilluminated. Namely, as the vehicle is shifted from the running standby state to the stopping standby state, a tune is generated only for a predetermined time, each predetermined light is deilluminated with the light amount gradually varied and each predetermined flasher is blinked, so as to inform the vehicle occupant that the vehicle has been shifted to the "stopping standby state". In this way, it is possible to inform the vehicle occupant of the deactivation of the vehicle in such an informing style as to make the vehicle occupant feel as if "the vehicle were falling asleep", with the result that the vehicle occupant can readily see that the vehicle has been brought to the deactivated state.

Although not specifically shown in relation to the above-described embodiment, when the vehicle is in the "standby state (running standby state)", the control section 1 may of course inform that the vehicle is in the running state, by generating a tone (PTNR), such as a predetermined "running-informing tone", in response to operation, by the vehicle occupant, of the accelerator or brake or a state signal from the prime mover 4.

Further, the embodiment of Fig. 10 has been described above in relation to the case where the standby state = running standby state, i.e. where the vehicle is shifted to the running state only in response to operation, by the vehicle occupant, of the accelerator. However, in some cases, the vehicle occupant has to operate in advance an activating switch separate from the accelerator, in order to allow the vehicle to be shifted to the running state on the basis of operation, by the vehicle occupant, of the accelerator; for example, it is necessary for the vehicle occupant to operate in advance a start button for activating a self starter that is an auxiliary mover for activating the engine, or an error-preventing start switch (in electric vehicles, no electric power is supplied to the motor unless this start button is depressed). In such a case, it is possible to define, as an internal state of the vehicle, an "idling state" different from the "running standby state", so that tone generation control, illumination control of each predetermined light, blinking control of each flasher, etc. may also be performed when the internal state of the vehicle has been shifted from the running standby state to the idling state. So, a specific example of informing schemes for use in the case where the "idling state" is defined will be explained below with reference to Fig. 11. Fig. 11 is a state transition diagram explanatory of another embodiment of the informing schemes where the vehicle is activated and deactivated in response to turning-on and turning-off of the main switch. In Fig. 11, there are illustrated, from top to bottom, respective state transitions of the main switch, activating switch, internal state memory, tone (sound) generation, light amount of a predetermined light and flasher.

First, once powering-on operation is performed, for example, by the vehicle occupant turning the main switch to the "ON" position, the self-check process is carried out and the internal state memory is set to the running standby state (STANDBY), after which the informing process is performed. Generation of a tone is controlled in such a manner that tone data corresponding to "pattern 1" (PTN1) are reproduced only for the tone generation time (t1). Further, illumination control is performed in such a manner that the light amount of the light is gradually increased, in synchronism with the tone generation time (t1), up to the one indicated by the light amount designating information (in this case, light amount value in the order of "0.6"). Furthermore, blinking control is performed on the flasher, on the basis of the flasher control information, in such a manner that the flasher repeats blinking every predetermined period only for the tone generation time (t1). Once the activating switch is turned on by the vehicle occupant when the vehicle is in the running standby state, the internal state memory is set to the idling state (IDLE), after which the informing process is performed. In the informing process, tone data corresponding to "pattern 3" (PTN3) are reproduced only for a tone generation time (t3). Further, illumination control is performed in such a manner that the light amount of the light is gradually increased, in synchronism with the tone generation time (t3), up to the one indicated by the light amount designating information (in this case, maximum light amount of a value "1.0"). Furthermore, blinking control is performed on the flasher, on the basis of the flasher control information, in such a manner that the flasher repeats blinking every predetermined period only for the tone generation time (t3). Once powering-off operation is performed, for example, by the vehicle occupant turning the main switch to the "OFF" position, the control section sets the internal state memory to the stopping standby state (SHUTDOWN), after which it performs the informing process. Description of this informing process is omitted because the informing process is the same as illustrated in Fig. 10. As set forth above, the tone generation control, light illumination control and flasher blinking control is also performed when the vehicle is shifted from the running standby state to the idling state; thus, the vehicle occupant can be informed that the vehicle has been shifted to any one of the various states.

In the above-described embodiments, the tone generation times of tones to be generated in response to various internal states of the vehicle are pre-defined, as the tone generation time information, in the informing style table. In an alternative, such a tone generation time etc. may be acquired from tone data of a tone being generated by the tone generation section 5 (tone generator unit).

There might sometimes be caused a difference between an actual tone generation time and a tone generation time measured by the control section 1. In such a case, tone generation states (indicating that a tone is being currently generated, that the tone generation has ended, etc.) may be acquired from the tone generation section 5 as noted above, so that control can be performed to compulsorily silence the tone at a time point when the actual tone generation has ended, i.e. when the control section 1 has received a tone generation end signal from the tone generation section 5 and to compulsorily set the light amount of each predetermined light to a value (designated by the light amount designating information).

Note that the tone generation control may be performed such that the tone to be generated in accordance with the internal state of the vehicle is gradually varied in tone volume. Further, whereas each of the above-described embodiments is constructed to vary the tone itself that is to be generated in accordance with the internal state of the vehicle, the present invention is not so limited; for example, a readout frequency of the same tone data may be varied. With such an alternative, the present invention can perform the informing process with tones, which are to be generated in accordance with various internal states of the vehicle, differentiated from one another in tempo.

Note that the blinking period and blinking pattern of each flasher may be varied in accordance with the internal state of the vehicle. In such a case, it is only necessary that the flasher control information in the informing style table be replaced with information designating a particular flasher blinking period and blinking pattern.

The light amount of each predetermined light need not necessarily be varied with a linear variation characteristic, and it may be varied with any other suitable variation characteristic as long as the light can appropriately reach a designated light amount at a tone generation end point.

The above-described embodiments are arranged to vary the light amount of each predetermined light within the tone generation time. Needless to say, a time, within which to vary the light amount of each predetermined light, may be predefined and a tone may be generated for a generation time determined in accordance with the predefined light amount variation time, oppositely to the above-described. In such a case, light amount variation times may be predefined in the informing table in place with tone generation times so that the illumination control of each predetermined light and the tone generation control can be performed on the basis of any one of the predefined light amount variation times.

The internal states of the vehicle may include other than the foregoing. For example, in some vehicles, a personal identification number key is predefined so that a personal identification number lock can be set and released with the personal identification number key. The information or notification by mutually-synchronized tone generation and light emission may be carried out in conformity with the setting/release of the lock.

According to present invention having been described above in relation to the embodiments explained with reference to Figs. 1 and 7 - 11, activation or deactivation of the vehicle is informed in informing styles, friendly to the vehicle occupant and easy to follow by the vehicle occupant, that can make the vehicle occupant feel as if "the vehicle were awaking" or "the vehicle were falling asleep". Thus, the present invention accomplishes the benefit that it can call the attention of the vehicle occupant to the activation or deactivation of the vehicle for a long time.

Whereas the embodiments have been described above, with reference to Figs. 1 - 11, in relation to a vehicle capable of actually running, the present invention may be applied to vehicles incapable of actually running, such as vehicles (or parts of the vehicles) used in driving simulators and game devices. Needless to say, the vehicles, to which the present invention is applied, may be other than motor cars and motorbikes, such as tractors, airplanes, ships and boats and electric trains.

Further, although the present invention has been described above as an apparatus or software program built in a vehicle, the whole or part of the construction of the present invention may be provided as an apparatus or software program for additional or subsequent installation in a vehicle. For example, a unit of the control section for controlling the information or notification of activation/deactivation of a vehicle, operation section, display section and tone generation section may be additionally or subsequently installed, as an apparatus, storage medium or the like, in the vehicle, to implement the necessary arrangements of the present invention.

## Claims

1. A state informing apparatus for informing an operating state of a vehicle, said state informing apparatus comprises:
detection means for detecting that the vehicle is currently in a running standby state;
tone generation means for generating a predetermined tone periodically when said detection means has detected that the vehicle is currently in the running standby state; and
display means for making a display in a display style that varies periodically in accordance with a displaying period synchronized with a generating period of the tone.

2. A state informing apparatus for informing an operating state of a vehicle, said state informing apparatus comprises:
detection means for detecting that the vehicle is currently in a running standby state;
display means for making a display in a display style that varies periodically, when said detection means has detected that the vehicle is currently in the running standby state: and
tone generation means for generating a tone periodically in accordance with a generating period synchronized with a displaying period of the display.

3. A state informing apparatus for informing an operating state of a vehicle, said state informing apparatus comprises:
detection means for detecting that the vehicle is currently in a running standby state;
tone generation means for generating a predetermined tone periodically when said detection means has detected that the vehicle is currently in the running standby state;
display means for making a display in a display style that varies periodically, when said detection means has detected that the vehicle is currently in the running standby state; and
control means for performing control to provide synchronization between the tone and variation in the display style.

4. A state informing apparatus for informing an operating state of a vehicle, said state informing apparatus comprises:
state detection means for detecting an operating state of a target device activated in response to operation;
display means for, in accordance with a result of operating state detection by said state detection means, making a display in a display style corresponding to the detected operating state and with a displaying period differing between a normal operating state and abnormal operating state of the device; and
tone generation means for generating a tone periodically in accordance with a generating period synchronized with the displaying period of the display.

5. A state informing apparatus as claimed in claim 2 or 4 wherein said tone generation means expands or contracts a reproduction time length of the tone, to thereby synchronize the generating period with the displaying period of the display.

6. A state informing apparatus as claimed in claim 4 wherein said display means causes a direction indicator to blink with the displaying period.

7. A state informing apparatus as claimed in claim 1 wherein said tone generation means generates the tone periodically on the basis of a tone-generation instruction signal and tone-silencing instruction signal.

8. A state informing apparatus as claimed in claim 2 wherein said tone generation means generates the tone periodically on the basis of a tone-generation instruction signal and tone-silencing instruction signal.

9. A state informing apparatus as claimed in claim 3 wherein said tone generation means generates the tone periodically on the basis of a tone-generation instruction signal and tone-silencing instruction signal.

10. A state informing apparatus as claimed in claim 4 wherein said tone generation means generates the tone periodically on the basis of a tone-generation instruction signal and tone-silencing instruction signal.

11. A state informing apparatus as claimed in claim 4 wherein the target device, of which operating state is to be detected, is at least one of a direction indicator, prime mover and battery.

12. A program for causing a computer provided in a vehicle to perform:
a step of detecting that the vehicle is currently in a running standby state;
a step of generating a predetermined tone periodically when said step of detecting has detected that the vehicle is currently in the running standby state; and
a step of causing a predetermined display device to make a display in a display style that varies periodically in accordance with a displaying period synchronized with a generating period of the tone.

13. A program for causing a computer provided in a vehicle to perform:
a step of detecting that the vehicle is currently in a running standby state;
a step of causing a predetermined display device to make a display in a display style that varies periodically, when said step of detecting has detected that the vehicle is currently in the running standby state: and
a step of generating a tone periodically in accordance with a generating period synchronized with a displaying period of the display.

14. A program for causing a computer provided in a vehicle to perform:
a step of detecting that the vehicle is currently in a running standby state;
a step of generating a predetermined tone periodically when said step of detecting has detected that the vehicle is currently in the running standby state;
a step of making a display in a display style that varies periodically, when said step of detecting has detected that the vehicle is currently in the running standby state; and
a step of performing control to provide synchronization between the tone and variation in the display style.

15. A program for causing a computer provided in a vehicle to perform:
a step of detecting an operating state of a target device activated in response to operation;
a step of, in accordance with a result of operating state detection by said step of detecting, making a display in a display style corresponding to the detected operating state and with a displaying period differing between a normal operating state and abnormal operating state of the device; and
a step of generating a tone periodically in accordance with a generating period synchronized with the displaying period of the display.

16. A method for informing an operating state of a vehicle, said method comprising:
a step of detecting that the vehicle is currently in a running standby state;
a step of generating a predetermined tone periodically when said step of detecting has detected that the vehicle is currently in the running standby state; and
a step of causing a predetermined display device to make a display in a display style that varies periodically in accordance with a displaying period synchronized with a generating period of the tone.

17. A method for informing an operating state of a vehicle, said method comprising:
a step of detecting that the vehicle is currently in a running standby state;
a step of causing a predetermined display device to make a display in a display style that varies periodically, when said step of detecting has detected that the vehicle is currently in the running standby state: and
a step of generating a tone periodically in accordance with a generating period synchronized with a displaying period of the display.

18. A method for informing an operating state of a vehicle, said method comprising:
a step of detecting that the vehicle is currently in a running standby state;
a step of generating a predetermined tone periodically when said step of detecting has detected that the vehicle is currently in the running standby state;
a step of making a display in a display style that varies periodically, when said step of detecting has detected that the vehicle is currently in the running standby state; and
a step of performing control to provide synchronization between the tone and variation in the display style.

19. A method for informing an operating state of a vehicle, said method comprising:
a step of detecting an operating state of a target device activated in response to operation;
a step of, in accordance with a result of operating state detection by said step of detecting, making a display in a display style corresponding to the detected operating state and with a displaying period differing between a normal operating state and abnormal operating state of the device; and
a step of generating a tone periodically in accordance with a generating period synchronized with the displaying period of the display.

20. An apparatus for informing operation in a vehicle, said apparatus comprising:
light emission means capable of being illuminated with a controlled light amount;
operation means for instructing at least activating or deactivation of the vehicle;
tone generation means for, per internal operating state of the vehicle having operated in response to an instruction from said operation means, generating a tone, corresponding to the internal operating state, for a predetermined tone generation time; and
control means for, per internal operating state of the vehicle, performing illumination control of said light emission means such that the light amount gradually increases or decreases within a predetermined time.

21. An apparatus as claimed in claim 20 wherein, per internal operating state of the vehicle, generation of the tone and the illumination control of said light emission means are performed with the tone generation time and the predetermined time synchronized with each other.

22. An apparatus as claimed in claim 20 wherein an increase/decrease rate of the light amount of said light emission means, on which the illumination control is performed by said control means, is calculated on the basis of light amount designating information and a current light amount of said light emission means.

23. An apparatus as claimed in claim 20 wherein a direction indicator is caused to blink when the illumination control is being performed on said light emission means by said control means.

24. An apparatus as claimed in claim 20 wherein said tone generation means reads out, from storage means, tone data stored in said storage means in association with any one of internal states of the vehicle and generates a tone, corresponding to the one internal state, for a predetermined tone generation time.

25. A program for causing a computer provided in a vehicle to perform:
a step of instructing at least activating or deactivation of the vehicle;
a step of, per internal operating state of the vehicle having operated in response to an instruction from said step of instructing, generating a tone, corresponding to the internal operating state, for a predetermined tone generation time; and
a step of, per internal operating state of the vehicle, performing illumination control of a predetermined light emitting device such that a light amount of said light emitting device within a predetermined time.

26. A method for informing operation in a vehicle, said method comprising:
a step of instructing at least activating or deactivation of the vehicle;
a step of, per internal operating state of the vehicle having operated in response to an instruction from said step of instructing, generating a tone, corresponding to the internal operating state, for a predetermined tone generation time; and
a step of, per internal operating state of the vehicle, performing illumination control of a predetermined light emitting device such that a light amount of said light emitting device within a predetermined time.
